# EUROPEAN PATENT APPLICATION

(11) **EP 1 553 756 A2**
(43) Date of publication of application: **13.07.2005**
(21) Application number: 04030975.9
(22) Date of filing: 29.12.2004
(51) Int. Cl.: H04N 5/00, H04N 5/765

(54) **Personal video recorder**

(30) Priority: 06.01.2004 US 753800
(71) Applicant: Sharp Kabushiki Kaisha, Osaka-shi, Osaka 545-8522 (JP)
(72) Inventor: Hallberg, Bryan Severt, WA 98682 (US)
(74) Representative: Müller - Hoffmann & Partner

(57) **Abstract**

Embodiments of the present invention include a personal video recorder that uses removable media. In one particular embodiment, the media is accessed through a PCMCIA interface. Recorded media can be removed and permanently stored, or may be inserted into another device for permanent storage.

## Description

### BACKGROUND OF THE INVENTION

### 1. Technical Field

This disclosure is directed to personal video recorders, and, more specifically, to a personal video recorder that uses removable media.

### 2. Description of the related art

Personal video recorders (PVRs) currently contain embedded hard disk drives (HDDs) to store encoded audio and video streams. Because the HDD can only be accessed while the disk itself is spinning, the HDD is the only non-solid state component of a PVR. As expected, because it is not solid state, the HDD is the part of a PVR most prone to failure. Replacing the HDD requires some technical aptitude, and is therefore not a user-serviceable item for most people. Additionally, present PVR users have no way to permanently archive recordings made to their HDDs, other than through the already defined methods in currently available PVRs, which are inadequate for some users. For instance, some PVRs only output an analog signal for archiving, which provides less fidelity than digital signals.

Embodiments of the invention address these and other limitations in the prior art.

### SUMMARY OF THE INVENTION

Embodiments of the present invention include a personal video recorder that uses removable media. In one particular embodiment, the media is accessed through a PCMCIA interface. Recorded media can be removed and permanently stored, or may be inserted into another device for permanent storage.

The foregoing and other features and advantages of the invention will become more readily apparent from the following detailed description of a preferred embodiment of the invention that proceeds with reference to the accompanying drawings.

### BRIEF DESCRIPTION OF THE DRAWINGS

FIG. 1 is a block diagram of a system that can incorporate embodiments of the invention.
FIG. 2 is a block diagram illustrating additional detail for the system of FIG. 1.
FIGS. 3A and 3B are example pinout connections for connecting the system of FIG. 1 to a removable media interface.
FIG. 4 is a chart illustrating example communication signals between the removable media and the system of FIG. 1.
FIG. 5 is a chart illustrating additional communication signals for the media processor of FIG. 1.
FIG. 6 is a chart illustrating an example memory map used in conjunction with the system illustrated in FIG. 1.
FIG. 7 is a functional block diagram illustrating one method of executing commands on the digital video processor of FIG. 1

### DETAILED DESCRIPTION

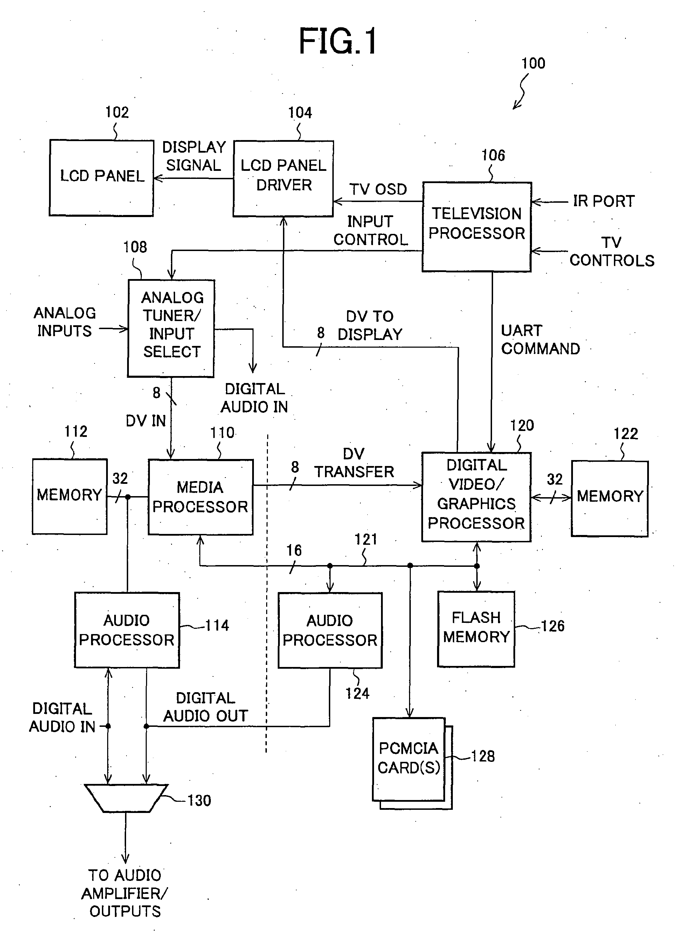

Figure 1 is a block diagram for a Liquid Crystal Display (LCD) television capable of operating according to some embodiments of the present invention. A television (TV) 100 includes an LCD panel 102 to display visual output to a viewer based on a display signal generated by an LCD panel driver 104. The LCD panel driver 104 accepts a primary digital video signal, which may be in a CCIR656 format (eight bits per pixel YC_{b}Cᵣ, in a "4:2:2" data ratio wherein two C_{b} and two C, pixels are supplied for every four luminance pixels), from a digital video/graphics processor 120.

A television processor 106 (TV processor) provides basic control functions and viewer input interfaces for the television 100. The TV processor 106 receives viewer commands, both from buttons located on the television itself (TV controls) and from a handheld remote control unit (not shown) through its IR (Infra Red) Port. Based on the viewer commands, the TV processor 106 controls an analog tuner/input select section 108, and also supplies user inputs to a digital video/graphics processor 120 over a Universal Asynchronous Receiver/Transmitter (UART) command channel. The TV processor 106 is also capable of generating basic On-Screen Display (OSD) graphics, e.g., indicating which input is selected, the current audio volume setting, etc. The TV processor 106 supplies these OSD graphics as a TV OSD signal to the LCD panel driver 104 for overlay on the display signal.

The analog tuner/input select section 108 allows the television 100 to switch between various analog (or possibly digital) inputs for both video and audio. Video inputs can include a radio frequency (RF) signal carrying broadcast television, digital television, and/or high-definition television signals, NTSC video, S-Video, and/or RGB component video inputs, although various embodiments may not accept each of these signal types or may accept signals in other formats (such as PAL). The selected video input is converted to a digital data stream, DV In, in CCIR656 format and supplied to a media processor 110.

The analog tuner/input select section 108 also selects an audio source, digitizes that source if necessary, and supplies that digitized source as Digital Audio In to an Audio Processor 114 and a multiplexer 130. The audio source can be selected―independent of the current video source―as the audio channel(s) of a currently tuned RF television signal, stereophonic or monophonic audio connected to television 100 by audio jacks corresponding to a video input, or an internal microphone.

The media processor 110 and the digital video/graphics processor 120 (digital video processor) provide various digital feature capabilities for the television 100, as will be explained further in the specific embodiments below. In some embodiments, the processors 110 and 120 can be TMS320DM270 signal processors, available from Texas Instruments, Inc., Dallas, Texas. The digital video processor 120 functions as a master processor, and the media processor 110 functions as a slave processor. The media processor 110 supplies digital video, either corresponding to DV In or to a decoded media stream from another source, to the digital video/graphics processor 120 over a DV transfer bus.

The media processor 110 performs MPEG (Moving Picture Experts Group) coding and decoding of digital media streams for television 100, as instructed by the digital video processor 120. A 32-bit-wide data bus connects memory 112, e.g., two 16-bit-wide x 1M synchronous DRAM devices connected in parallel, to processor 110. An audio processor 114 also connects to this data bus to provide audio coding and decoding for media streams handled by the media processor 110.

The digital video processor 120 coordinates (and/or implements) many of the digital features of the television 100. A 32-bit-wide data bus connects a memory 122, e.g., two 16-bit-wide x 1M synchronous DRAM devices connected in parallel, to the processor 120. A 16-bit-wide system bus connects the digital video processor 120 to the media processor 110, an audio processor 124, flash memory 126, and removable PCMCIA cards 128. The flash memory 126 stores boot code, configuration data, executable code, and Java code for graphics applications, etc. PCMCIA cards 128 can provide extended media and/or application capability. The digital video processor 120 can pass data from the DV transfer bus to the LCD panel driver 104 as is, and/or processor 120 can also supercede, modify, or superimpose the DV Transfer signal with other content.

The multiplexer 130 provides audio output to the television amplifier and line outputs (not shown) from one of three sources. The first source is the current Digital Audio In stream from the analog tuner/input select section 108. The second and third sources are the Digital Audio Outputs of audio processors 114 and 124. These two outputs are tied to the same input of multiplexer 130, since each audio processor 114, 124, is capable of tri-stating its output when it is not selected. In some embodiments, the processors 114 and 124 can be TMS320VC5416 signal processors, available from Texas Instruments, Inc., Dallas, Texas.

As can be seen from figure 1, the TV 100 is broadly divided into three main parts, each controlled by a separate CPU. Of course, other architectures are possible, and figure 1 only illustrates an example architecture. Broadly stated, and without listing all of the particular processor functions, the television processor 106 controls the television functions, such as changing channels, changing listening volume, brightness, and contrast, etc. The media processor 110 encodes audio and video (AV) input from whatever format it is received into one used elsewhere in the TV 100. Discussion of different formats appears below. The digital video processor 120 is responsible for decoding the previously encoded AV signals, which converts them into a signal that can be used by the panel driver 104 to display on the LCD panel 102.

In addition to decoding the previously encoded signals, the digital video processor 120 is responsible for accessing the PCMCIA based media 128, as described in detail below. Other duties of the digital video processor 120 include communicating with the television processor 106, and acting as the master of the PVR operation. As described above, the media processor 110 is a slave on the processor 120's bus. By using the two processors 110, 120, the TV 100 can perform PVR operations. The digital video processor 120 can access the memory 112, which is directly connected to the media processor 110, in addition to accessing its own memory 122. Of course, the two processors 110, 120 can send and receive messages to and from one another.

To provide PVR functions, such as record, pause, rewind, playback, etc, the digital video processor 120 stores Audio Video (AV) files on removable media. In one embodiment, the removable media is hosted on or within a PCMCIA card. Many PVR functions are known in the prior art, such as described in US 6,233,389 and 6,327,418, assigned to TIVO, Inc., and which are hereby incorporated herein by reference.

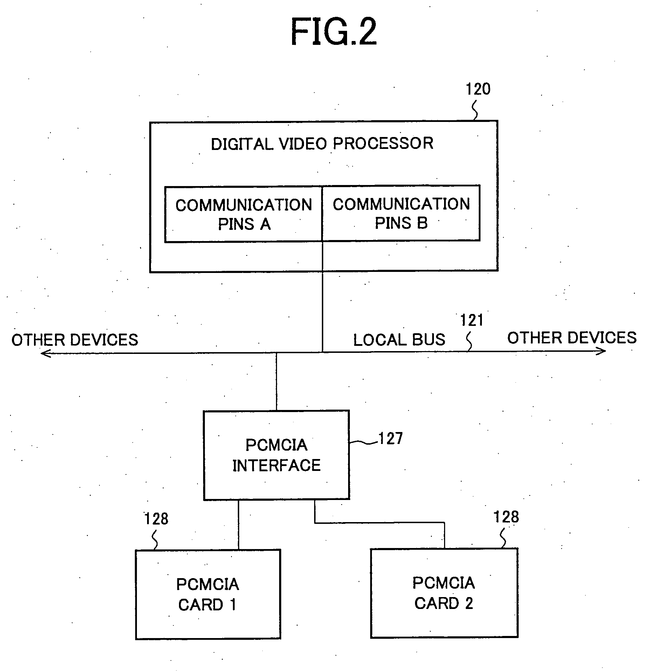

Figure 2 illustrates additional details of the TV 100 of figure 1. Specifically, connected to the digital video processor is the processor 120's local bus 121. Coupled to the local bus 121 is a PCMCIA interface 127; which is a conduit between PCMCIA cards 128 and the digital video processor 120. The interface 127 logically and physically connects any PCMCIA cards 128 to the digital video processor 120. In particular, the interface 127 may contain data and line buffers so that PCMCIA cards 128 can communicate with the digital video processor 120, even though operating voltages may be dissimilar, as is known in the art. Additionally, debouncing circuits may be used in the interface 127 to prevent data and communication errors when the PCMCIA cards 128 are inserted or removed from the interface 127. Additional discussion of communication between the digital video processor 120 and the PCMCIA cards 128 appears below.

A PCMCIA card is a type of removable media card that can be connected to a personal computer, television, or other electronic device. Various card formats are defined in the PC Card standard release 8.0, by the Personal Computer Memory Card International Association, which is hereby incorporated by reference. The PCMCIA specifications define three physical sizes of PCMCIA (or PC) cards: Type I, Type II, and Type III. Additionally, cards related to PC cards include SmartMedia cards and Compact Flash cards. Type I PC cards typically include memory enhancements, such as RAM, flash memory, one-time-programming (OTP) memory and Electronically Erasable Programmable Memory (EEPROM). Type II PC cards generally include I/O functions, such as modems, LAN connections, and host communications. Type III PC cards may include rotating media (disks) or radio communication devices (wireless). Embodiments of the invention can work with all forms of removable media, no matter what form it may come in or how it may connect to the TV 100, although some types of media are better suited for particular storage functions. For instance, files may be stored on and retrieved from Flash memory cards as part of the PVR functions. However, because of the limited number of times Flash memory can be safely written to, they may not be the best choice for repeated PVR functions. In other words, while it may be possible to store compressed AV data on a Flash memory card, doing so on a continual basis may lead to eventual failure of the memory card well before other types of media would fail.

Referring back to FIG. 1, to perform PVR functions, video and audio input is encoded by the media processor 110 and stored in the memory 112, which is located on the local bus of the media processor 110. Various encoding techniques could be used, including any of the MPEG 1, 2, 4, or 7 techniques, which can be found in documents ISO/1172-, ISO/13818, ISO/14496, and ISO/15938, respectively, all of which are herein incorporated by reference. Once encoded, the media processor 110 may store the encoded video and audio in any acceptable format. Once such format is Advanced Systems Format (ASF), by Microsoft, Inc. in Redmond Washington. The ASF format is an extensible file format designed to store synchronized multimedia data. Audio and/or Video content that was compressed by an encoder or encoder/decoder (codec), such as the MPEG encoding functions provided by the media processor 110 described above, can be stored in an ASF file and played back with a Windows Media Player or other player adapted to play back such files. The current specification of ASF is entitled "Revision 01.20.01e", by Microsoft Corporation, September, 2003, and is hereby incorporated herein by reference. Additionally, two patents assigned to Microsoft, Inc., and specifically related to media streams, US 6,415, 326, and US 6,463,486, are also hereby incorporated by reference.

Once the media processor 110 encodes the AV signals, which may include formatting them into an ASF file, the media processor 110 sends a message to the digital video processor 120 that encoded data is waiting to transferred to the removable storage (e.g., the PCMCIA media 128). After the digital video processor 120 receives the message, it reads the encoded data from the memory 112. Once read, the digital video processor 120 stores the data to the PCMCIA media 128. The digital video processor 120 then tells the media processor 110 that the data has been stored on the PCMCIA media 128. This completes the encoding operation.

Outputting AV signals that had been previously stored on the removable media begins by the digital video processor 120 accessing the data from the media. Once accessed, the data is read from the PCMCIA card 128 and stored in the memory 122 connected to the digital video processor 120 (FIG. 1) The digital video processor 120 then reads the data from the memory 122 and decodes it. Time shifting functions of the PVR are supported by random access to the PCMCIA card.

In addition to time shifted AV viewing, real-time AV can also be displayed in this TV 100 system. To view real-time AV, video signals pass through the media processor 110 and into the digital video processor 120.. The digital video processor 120 can overlay graphics on the video, as described above, and then output the composite image to the panel driver 104. Graphics overlay is also supported during PVR playback operation. The graphics are simply overlaid on the video signal after it has been decoded by the digital video processor 120.

### Interaction with the PCMCIA card

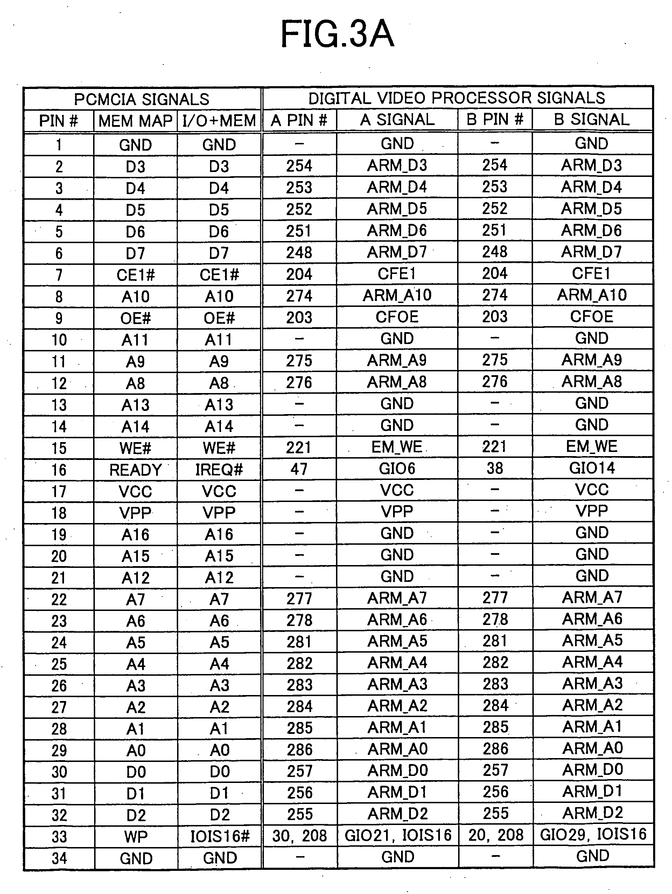

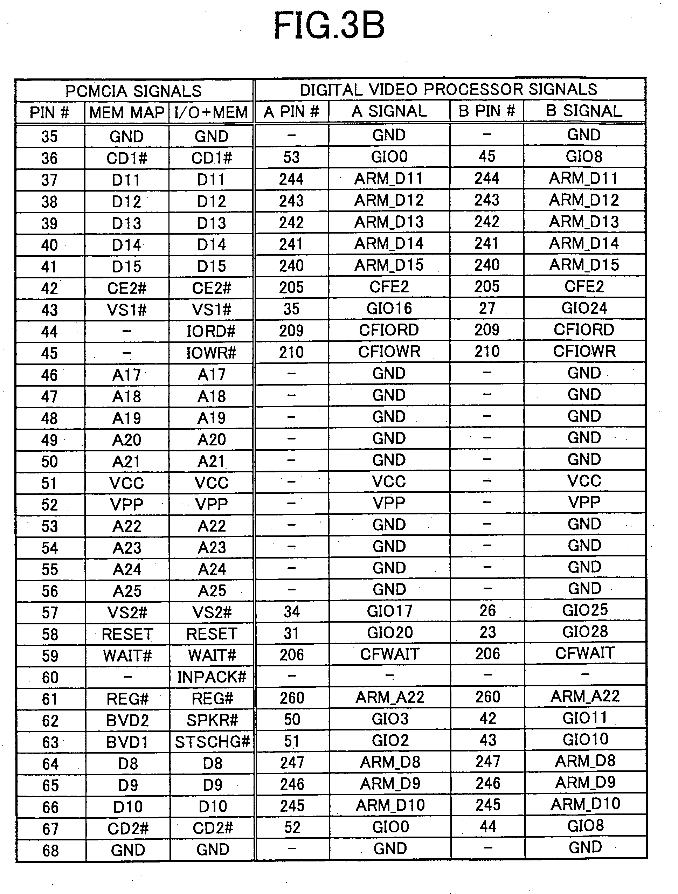

Communication between the digital video processor 120 and the PCMCIA card 128 is facilitated by the signal communication between pins on the PCMCIA cards 128 and corresponding pins located on the digital video processor 120. An example set of pinouts is illustrated as FIGs 3A and 3B. Pins corresponding to a PCMCIA card are listed with the pins connected to the digital video processor 120. For instance, pin 2 of a PCMCIA card is connected to pin 254 of the digital video processor 120. Further, as illustrated in FIGs 3A and 3B, there are two sets of pinouts for the digital video processor 120, labeled as "A pin number" and "B pin number" so that, in this embodiment of the invention, two PCMCIA cards 128 can be connected to the digital video processor 120 simultaneously. Another feature of this embodiment is that not all of the pinouts of "A" and "B" pins are the same as one other. For instance, pin 16 of a PCMCIA card, which reports when the PCMCIA card is "ready," as defined in the PCMCIA standards above, is connected to pin #47 of the digital video processor 120 for slot "A", while being connected to pin # 38 of the digital video processor 120 for slot "B". In this way, the digital video processor 120 can interact with each of the PCMCIA cards 128 connected two it independently. As many signals are used both for the A slot and the B slot, additional signals and logic are used to select and activate each slot. For instance, the digital video processor 120 may be writing to one of the PCMCIA cards 128 while reading from another. As mentioned above, having two PCMCIA slots in the interface 127 (FIG. 2) is only illustrative, and any number of slots may be present in the TV 100. Accommodating additional PCMCIA cards 128 in the TV 100 (FIG. 1) may require additional digital video processors 120, however.

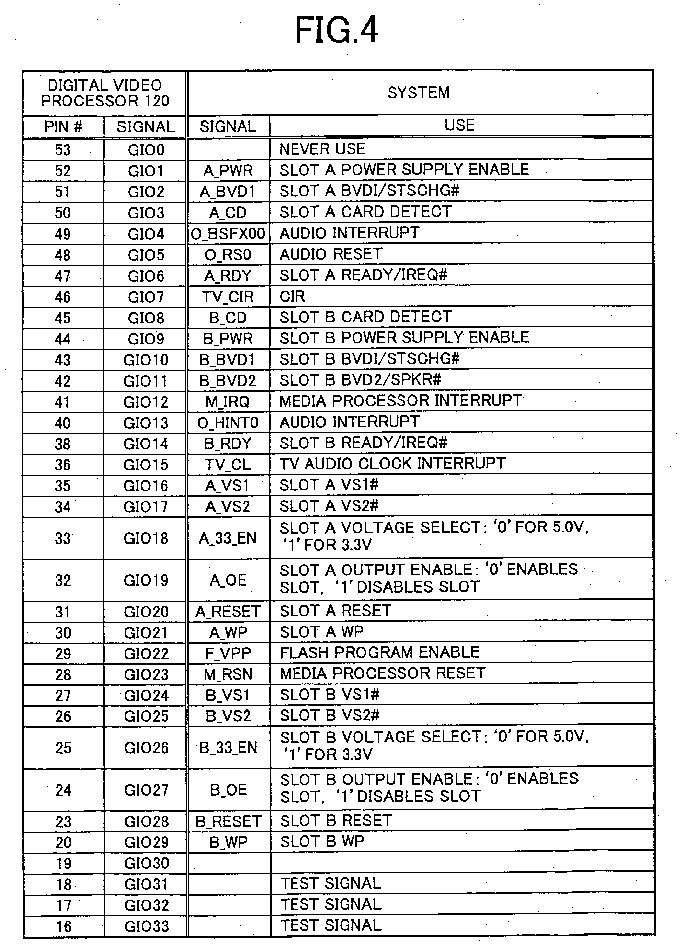

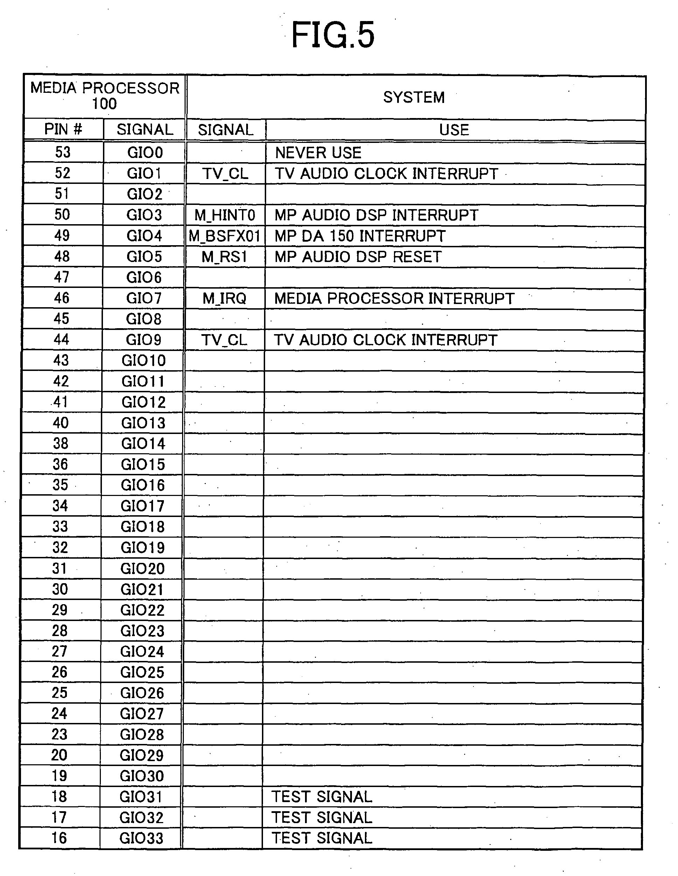

Example GIO (General Input/Output) signals used for communication between the digital video processor 120 and the PCMCIA cards 128 are illustrated in FIG. 4. PCMCIA signals that may be best suited to interrupts are assigned to the digital video processor 120 signals GIO[1:15]. PCMCIA signals that do not require interrupts are assigned to the digital video processor 120 signals GIO[16:33]. The slot A and slot B signals may be similarly grouped for easier software design. For completeness, GIO signals for the media processor 110 are illustrated in FIG. 5.

The particular type of media in the PCMCIA slot can be detected using methods described in the PC Card standard. The standard allows for the distinction between solid state media and rotating disk media. Solid state media often has a limited number of read and write cycles before the media is no longer fully functional, while rotating disk media has a much longer life cycle. By detecting the type of media, the TV system 100 can determine if the media is suitable for PVR operation. Particular TV systems 100 may, for instance, prohibit PVR functions if only solid state media PCMCIA cards are mounted in the interface 127.

Multiple media formats are supported using the PCMCIA standard. This allows a user to use their favorite format, provided the data throughput rate is sufficient.

To power the interface 127 (FIG. 2), which may be a PCMCIA Socket, the following procedures can be used. After determining the required supply voltage, using the slot_VS1 and slot_VS2 signals according to the PCMCIA standard, the proper voltage may be selected using the slot_33_EN signal. After selecting the required voltage, the slots power may be enabled using the slot_PWR signal. After enabling the power, the slot's circuitry may be enabled using the slot_OE signal.

After slots in the interface 127 are enabled, the desired slot is selected by ARM address bit 19, as shown in the memory map of FIG. 5. External logic will then route the digital video processor 120 CFE1, CFE2, CFWAIT, IOIS16, and ARM_D[15:0] signals.

In embodiments of the TV system 100 that only use one PCMCIA slot, the CFRDY signal may be used. However, in embodiments that support more than one PCMCIA slot, the CFRDY signal is not used, as it would only support a single slot. Instead, separate GIO6 and GIO14 signals are used.

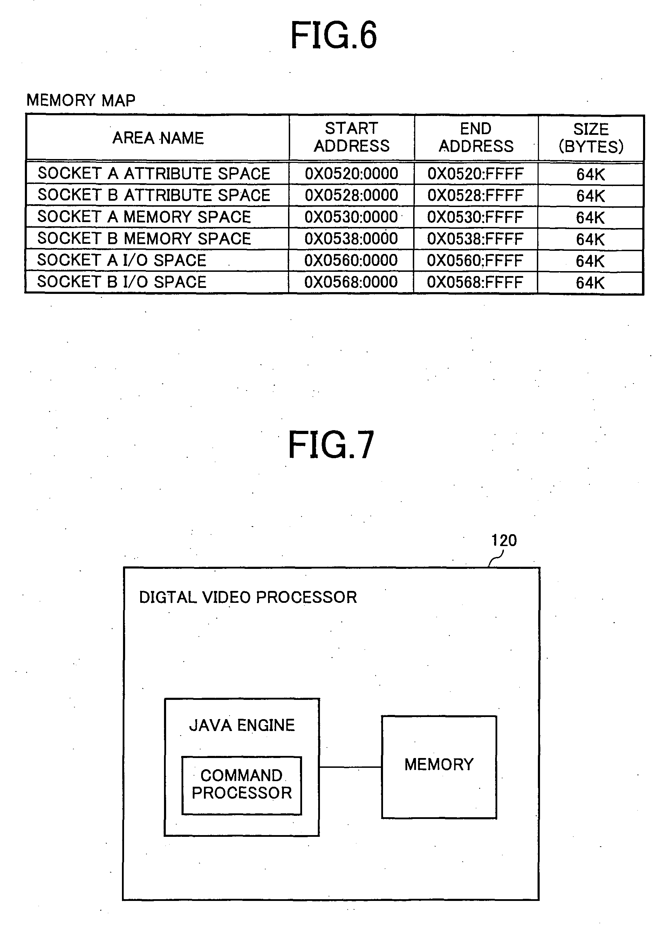

The TV system 100 may modify the PCMCIA standard in regards to Attribute space access. To provide for this issue, in this mode, the REG signal (FIGs 3A, 3B) may be connected to an ARM address pin 20 instead of the digital video processor 120's A22 signal. Therefore, whether accessing either Attribute or Memory space, the CFMOD bit is set to 1, and the memory map shown of FIG. 6 can be used to select either Attribute or Memory space.

Optimally, newly formatted data is used for the PVR operation. This improves PVR performance by reducing media fragmentation. In operation, a data storage file is created on the media on the PCMCIA card 128 when PVR is first enabled. This allows a contiguous File Allocation Table (FAT) sector chain to be created on the media, improving overall performance. Optimally, the file remains on the disk even when PVR operation is disabled on the TV system 100, such that the media allocation is immediately available, and contiguous for future PVR operations. The file size on the PCMCIA media can be a function of a desired minimal size, the amount of room currently available on the media, the total amount of storage capacity of the media, or other factors. The file size and the encoded AV bit rate by the media processor 110 determine the amount of time shift possible. A circular file may be used, containing data similar to that described in the ASF standards, described above, for optimal media utilization.

### Performing PVR functions

PVR functions can be performed by generating proper signals to control functions for the PCMCIA cards. In one embodiment, the digital processor 120 can include a java engine, as illustrated in FIG. 7. The java engine can perform particularized java functions when directed to, such as when an operator of the TV 100 (FIG. 1) operates a remote control, or when directed by other components of the TV 100 system to control particular operations. For instance, an operator may indicate that he or she would like a particular show recorded. Additionally, at the operator's convenience, the operator may select a previously recorded show for playback. Some of the commands that the java engine of FIG. 7 can perform are listed in table 1, below.

### Table 1:

Function
- Get current media mode
- Set current media mode
- Load media mode
- Begin PVR recording/playback
- End PVR recording
- Begin PVR recording to a selected file
- Begin PVR playback of a selected file
- Pause playback of the currently played PVR file
- Resume playback of the currently played PVR file
- Skip ahead or backwards in the current PVR file by requested number of seconds
- Jump to live video during PVR mode
- Stop recording currently active PVR file
- Stop playback of currently active PVR play file
- Set fast playback speed of currently active PVR playback file to speed factor
- Set fast playback speed of currently active PVR playback file to the inverse of factor

Using the system described above, a PVR can be designed using PCMCIA base media, thus supporting easy media removal and replacement, and multiple media formats.

Thus, described, embodiments of the invention are able to include the following functions: A PVR that uses removable media inserted into a removable interface for storage; a PVR that supports multiple media formats; allocating PVR media space on removable media; and checking for media format before recording to low lifetime media.

Having described and illustrated the principles of the invention in a preferred embodiment thereof, it should be apparent that the invention could be modified in arrangement and detail without departing from such principles. We claim all modifications and variation coming within the spirit and scope of the following claims.

## Claims

1. A television system, comprising:
a media encoder having an input for accepting an incoming video media stream;
a first storage location coupled to the media encoder and structured to buffer an encoded media stream;
a processor structured to generate signals to copy portions of the buffered media stream to an interface for removable media;
a second storage location structured to store encoded data retrieved from the interface; and
a decoder coupled to the second storage location and structured to deliver an outgoing video stream.

2. The television system of claim 1 wherein the interface comprises a slot structured to hold a PCMCIA card.

3. The television system of claim 1 wherein the interface is structured to hold more than one removable media simultaneously.

4. The television system of claim 3 wherein the interface comprises a set of pins structured to connect a removable media item to the processor.

5. The television system of claim 3 wherein the interface comprises:
a first set of pins structured to connect a first piece of removable media to the processor; and
a second set of pins structured to connect a second piece of removable media to the processor.

6. The television system of claim 5 wherein at least one of the pins from the first set connects to a same input of the processor as at least one of the pins from the second set.

7. An audio/video system, comprising:
a media encoder having an input for accepting a media stream, and having a control input for accepting a command to encode the media stream;
a storage location coupled to the media encoder and structured to buffer an encoded media stream;
a controller coupled to the media encoder and to the storage location, the controller structured to accept a command from the media encoder after the encoded media stream is stored in the storage location;
a detector structured to detect presence of removable media coupled to an interface of the controller; and
a processor structured to generate signals to copy portions of the buffered media stream to the interface when removable media is coupled to the interface.

8. The system of claim 7 wherein the interface comprises a slot structured to hold a PCMCIA card.

9. The system of claim 7 wherein the interface is structured to hold more than one removable media simultaneously.

10. The system of claim 9 wherein the interface comprises a set of pins structured to connect to a removable media item to the processor.

11. The system of claim 10 wherein the interface comprises:
a first set of pins structured to connect a first piece of removable media to the processor; and
a second set of pins structured to connect a second piece of removable media to the processor.

12. The system of claim 11 wherein at least one of the pins from the first set connects to a same input of the processor as at least one of the pins from the second set.

13. A method for storing data, comprising:
encoding a stream of data;
storing sections of the encoded stream into a buffer;
detecting the presence of removable media; and
after the presence of removable media is detected, generating signals to transmit data from the buffer to the removable media.

14. The method of claim 13 wherein detecting the presence of removable media comprises interrogating a PCMCIA slot to determine if a PC card is inserted therein.

15. The method of claim 13, further comprising:
generating signals to transmit data from the removable media to a decoder.

16. The method of claim 13 wherein generating signals to transmit data comprises executing a java applet.

17. A method for storing data, comprising:
detecting the presence of removable media in a personal video recorder system;
encoding a stream of data;
storing sections of the encoded stream into a buffer;
generating signals to transmit data from the buffer to the removable media; and
generating signals to mark as unoccupied portions of the buffer from which data has been transmitted to the removable media.

18. The method of claim 17 wherein detecting the presence of removable media comprises interrogating a PCMCIA slot to determine if a PC card is inserted therein.

19. The method of claim 17, further comprising:
generating signals to transmit data from the removable media to a decoder.

20. The method of claim 17 wherein generating signals to transmit data comprises executing a java applet.
